**Europäisches Patentamt**

**European Patent Office**

**Office européen des brevets**

(19)

(11) Veröffentlichungsnummer: **0 245 406 B1**

# (12) EUROPÄISCHE PATENTSCHRIFT

(45) Veröffentlichungstag der Patentschrift:
**06.03.91 Patentblatt 91/10**

(51) Int. Cl.$^5$: **B01D 1/26,** B01D 3/06,
C02F 1/08, C02F 1/06

(21) Anmeldenummer: **86906821.3**

(22) Anmeldetag: **17.11.86**

(86) Internationale Anmeldenummer:
**PCT/EP86/00663**

(87) Internationale Veröffentlichungsnummer:
**WO 87/02903 21.05.87 Gazette 87/11**

(54) **VERFAHREN UND VORRICHTUNG ZUR DESTILLATION VON SÜSSWASSER AUS MEERWASSER.**

(30) Priorität: 16.11.85 DE 3540732

(43) Veröffentlichungstag der Anmeldung:
**19.11.87 Patentblatt 87/47**

(45) Bekanntmachung des Hinweises auf die
Patenterteilung:
**06.03.91 Patentblatt 91/10**

(84) Benannte Vertragsstaaten:
**AT BE CH DE FR GB IT LI LU NL SE**

(56) Entgegenhaltungen:
**FR-A- 1 516 244**
**FR-A- 2 156 765**
**GB-A- 2 120 950**
**US-A- 3 303 106**

(73) Patentinhaber : **NASSER, Gamal El Din**
**Egenhofer Strasse 2**
**W-8039 Puchheim (DE)**

(72) Erfinder : **NASSER, Gamal El Din**
**Egenhofer Strasse 2**
**W-8039 Puchheim (DE)**

(74) Vertreter : **Patentanwälte Kirschner & Grosse**
**Forstenrieder Allee 59**
**W-8000 München 71 (DE)**

## Beschreibung

Die Erfindung betrifft ein Verfahren zur Destillation von Süßwasser aus Meerwasser durch Filmverdampfung in einem mehrstufigen VTE-Prozeß, wobei das Meerwasser nach Durchlaufen der ersten VTE-Prozeß-Stufe jeweils vor Eintritt in die nächstfolgende VTE-Prozeßstufe über eine Staustelle geführt und dabei in mindestens je einer MSF-Prozeß-Stufe einer Entspannungsverdampfung unterworfen wird, wobei das jeweilige Süßwasser-Destillat und das jeweilige Sole-Kondensat alle nachfolgenden VTE-Prozeß- und MSF-Prozeß-Stufen gemeinsam durchlaufen derart, daß der letzten VTE-Prozeß-stufe das Sole-Kondensat und der letzten MSF-Prozeß-Stufe das Süßwasser-Destillat entnommen werden können, wobei der zur Aufheizung des Meerwassers dienende Dampf mit der ersten VTE-Prozeß-Stufe beginnend durch alle Verdampfungsstufen nacheinander geführt und dabei mit den Dampfanteilen zumindest aus den anfänglichen VTE-Prozeß-Stufen vermischt wird, und wobei bei der stufenweisen Verdampfung anfallende Inertgase abgesaugt werden.

Unter einem VTE- (Vertical Tube Evaporation) Prozeß wird ein mehrstufiger Filmverdampfungs-Prozeß verstanden, bei dem das zu verdampfende Meerwasser durch über Primärdampf aufgeheizte Rohrbündel-Wärmetauscher geführt wird. Unter einem MSF-(Multiple-Stage-Flash-Evaporation) Prozeß wird ein mehrstufiger Entspannungs-Verdampfungsprozeß verstanden, bei dem das zu verdampfende heiße Meerwasser zahlreiche, in ihren unteren Teilen Wehre und Durchlässe aufweisende Entspannungskammern durchströmt. In den oberen Teilen der Entspannungskammern sind die vom zufließenden Meerwasser durchflossenen Rohre des Vorwärmers angebracht, an denen der Dampf kondensiert wird. Aus der letzten Entspannungskammer kann das Süßwasser-Destillat und das Sole-Kondensat entnommen werden ; vergleiche Ullmann, Enzyklopädie der Chemie, 3. Auflage, 18. Band, Seite 465.

Ein Verfahren und eine Vorrichtung der oben beschriebenen Art sind durch die DE-OS 32 39 816 bekannt geworden. Bei der bekannten Vorrichtung wird das vorgewärmte Meerwasser in einem mehrstufigen Prozeß nach Durchlaufen der ersten VTE-Prozeß-Stufe jeweils vor Eintritt in die nächstfolgende VTE-Prozeß-Stufe über eine Staustelle geführt und dabei in mindestens je einer MSF-Prozeß-Stufe einer Entspannungsverdampfung unterworfen. Dabei durchlaufen das jeweilige Süßwasser-Destillat und das jeweilige Sole-Kondensat alle nachfolgenden VTE-Prozeß- und MSF-Prozeß-Stufen gemeinsam derart, daß der letzten VTE-Prozeß-Stufe das Solekondensat und der letzten MSF-Prozeß-Stufe das Süßwasser-Destillat entnommen werden können. Der der Aufheizung des Meerwassers dienende Dampf wird, ausgehend von der ersten VTE-Prozeß-Stufe durch alle Verdampfungsstufen nacheinander geführt und dabei mit den Dampfanteilen zumindest aus den anfänglichen VTE-Prozeß-Stufen vermischt. Die bei der Stufenweisen Verdampfung anfallenden Inertgase werden pro Stufe abgesaugt und das Sole-Kondensat der niederdruckseitigen VTE-Prozeß-Stufen wird jeweils in mehreren MSF-Prozeß-Stufen pro VTE-Stufe entspannt. Um eine Verschlechterung des Wirkungsgrades des Destillationsprozesses zu vermeiden, muß eine ständige Inertgasabsaugung aus der in der geometrischen Mitte der VTE-Prozeßstufe angeordneten prägefreien Zone erfolgen, welche die spaltähnlichen horizontal ausgerichtet liegenden und für die Heizdampfführung dienenden Kanäle miteinander verbindet. Die bei jeder Entspannung und Kondensation anfallenden Inertgase werden bei der vorbekannten Vorrichtung aus jeder Stufe an zwei Stellen abgesaugt, wobei die Absaugung an den Endpunkten des Kondensationsvorganges erfolgt. Die im VTE-Prozeß-Teil anfallenden Inertgase werden durch einen Hohlraum zwischen den Leitblechen einer Seitenwand des die VTE- und MSF-Prozeß-Stufen aufnehmenden Behälters entlang des jeweils untersten Spaltquerschnittes des Fallfilm-Verdampfers, ausgehend von der Mitte (Kondensationsende) jeder Wärmeaustauschfläche, abgesaugt. Dagegen werden die anfallenden Inertgase beim Kondensationsvorgang am Vorwärmer ebenfalls über Stutzen an der gegenüberliegenden beweglichen Seitenwand des Behälters über einen Hohlraum zwischen dem Vorwärmer und der Seitenwand am Endpunkt der Kondensation abgesaugt.

Bei der Absaugung aus der VTE-Prozeß-Stufe ergibt sich der Nachteil, daß das in Richtung zum Rohwasser-Vorwärmer abfließende Süßwasser-Destillat in entgegengesetzter Richtung zu dem abgesaugten Gemisch aus Inertgasen und Restdampf strömt. Damit das Süßwasser-Destillat abfließen kann, ist deshalb ein größerer Niveauunterschied erforderlich, was verständlicherweise den Nachteil mit sich bringt, daß größere Wärmetauscherflächen abgedeckt werden und damit für den Wärmetausch verlorengehen. Ferner ergibt sich durch das Gegenstromprinzip eine verschlechterte Spülung der prägungsfreien Zone von Inertgasen, so daß ein größerer Dampfdurchsatz erforderlich ist. Ein weiterer Nachteil besteht darin, daß mit der Absaugung des Inertgases Restdampf verlorengeht, welcher nicht zur Vorwärmung des Rohwassers ausgenutzt werden kann. Schließlich ist die Absaugung des Inertgases aufwendig, da diese an zwei getrennt voneinander angeordneten stellen erfolgt.

Der Erfindung liegt daher die Aufgabe zugrunde, das bekannte Verfahren und die zur Durchführung dienende Vorrichtung derart zu verbessern, daß eine größere Ausnutzung der Heizfläche der VTE-Prozeß- und MSF-Prozeß-Stufen erzielt wird und daß die Absaugung der Inertgase vereinfacht wird.

Ausgehend von dem Verfahren zur Destillation von Süßwasser aus Meerwasser durch Filmverdampfung in einem mehrstufigen VTE-Prozeß gemäß der DE-OS 32 39 816 wird die vorgenannte Aufgabe dadurch gelöst, daß das Süßwasser-Destillat und die Inertgase in der gleichen Strömungsrichtung mit dem aus Destillat-, bzw. Kondensat- und Primärdampf bestehenden Restdampf aus den jeweiligen VTE-Prozeß-Stufen abgeleitet werden.

Die zur Durchführung des erfindungsgemäßen Verfahrens dienende Vorrichtung ist dadurch gekennzeichnet, daß auf der zum Rohwasser-Vorwärmer gelegenen Heizdampf-Eintrittsseite der VTE-Prozeß-Stufe wenigstens eine untere spaltähnliche Kanalreihe gegenüber dem zugeführten Heizdampf abgeschirmt ist, so daß Süßwasser-Destillat und das Gemisch aus Inertgasen und Restdampf in gleichgerichteter Strömung aus der prägungsfreien Zone über diese spaltähnliche Kanalreihe ableitbar sind.

Weitere vorteilhafte Ausgestaltungen des Gegenstandes der Erfindung ergeben sich aus den Unteransprüchen.

Die Kombination der beiden an sich bekannten Prozesse zu einem einzigen Verdampfungsprozeß ermöglicht nicht nur eine optimale Ausnützung der zugeführten Verdampfungsenergie, sondern führt auch zu einer überaus einfachen konstruktiven Gestaltung der Kolonnen, wenn für Vorwärmer und Fallfilm-Verdampfer geprägte, ebene Wärmetauscher-Platten benutzt werden, die die Realisierung einer beliebig hohen Stufenzahl für die Ausnützung eines zur Verfügung stehenden Temperatur-und Druckgefälles und eine einfache austauschbare Unterbringung in einem gemeinsamen senkrecht stehenden Druckbehälter ermöglicht. Die zwischengeschalteten MSF-Prozeß-Stufen lassen sich dabei als geeignet gebogene Leitbleche ausbilden, die gleichzeitig als Begrenzungen für die unterschiedliche Druckhöhen aufweisenden Druckräume dienen. Der ebenfalls im druckdichten Behälter vertikal angeordnete Vorwärmer schließt mit seinen Heizflächen direkt an die Dampfräume der einzelnen VTE- und MSF-Prozeß-Stufen an.

Gegenüber der durch die DE-A-32 39 816 bekannt gewordenen Vorrichtung zur Destillation von Süßwasser besitzt die erfindungsgemäße Vorrichtung den Vorteil, daß durch die in der gleichen Strömungsrichtung erfolgende Ableitung des Süßwasser-Destillats und der Inertgase mit dem aus Destillat-, bzw. Kondensat- und Primärdampf bestehenden Restdampf eine Verbesserung der Spülung der VTE-Prozeß-Stufen sowie eine verbesserte Ableitung des Süßwasser-Destillats und schließlich eine verbesserte Ausnutzung des Restdampfes in der entsprechenden Rohwasservorwärmerstufe erzielt werden. Durch die verbesserte Abführung des Süßwasser-Destillats ist ein im Vergleich zu der bekannten Vorrichtung geringes Wasserniveau möglich, so daß größere Wärmetauscherflächen für den Wärmetausch zur Verfügung stehen. Schließlich wird auch die Absaugung der Inertgase insgesamt dadurch vereinfacht, daß diese nur noch an einer Stelle, nämlich am Endpunkt der Kondensation abgesaugt werden.

Weitere vorteilhafte Merkmale und Ausgestaltungen des Gegenstandes der Erfindung ergeben sich aus der nachfolgenden Beschreibung eines bevorzugten Ausführungsbeispiels anhand der Zeichnung. Darin zeigen :

Fig. 1 ein Flußdiagramm der erfindungsgemäßen Vorrichtung zur Destillation von Süßwasser aus Meerwasser und

Fig. 2 eine schematische Schnittdarstellung durch einen zwei VTE-Prozeß-Stufen und mehrere MSF-Stufen umfassenden Fallfilm-Verdampfer.

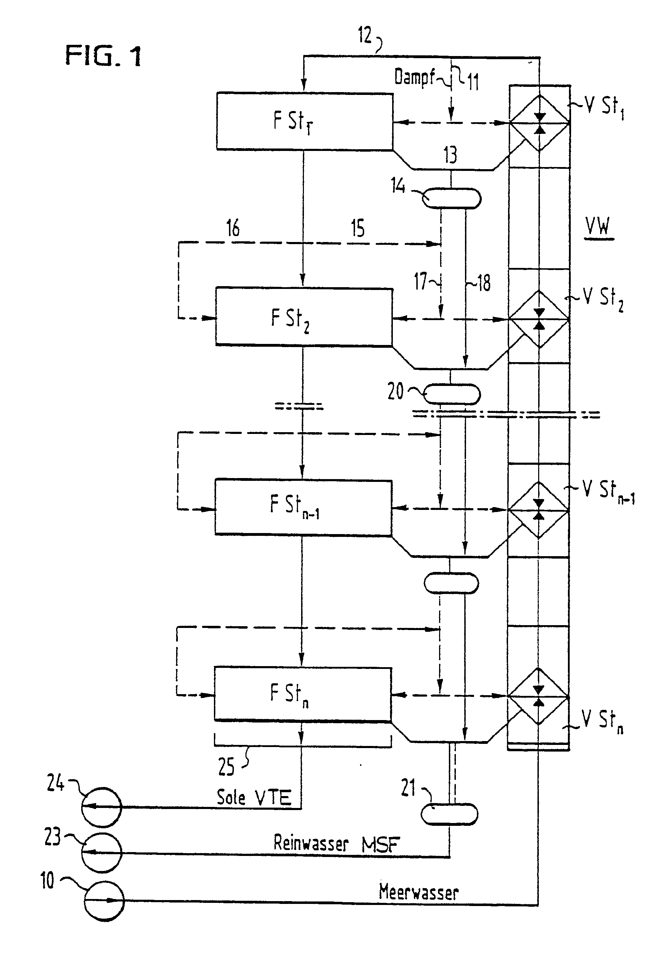

Wie das in Fig. 1 dargestellte Flußdiagramm zeigt, wird das mittels einer Pumpe 10 zugeführte kalte Meerwasser über einen mit kondensierendem Dampf beheizten vielstufigen-Stufen $VSt_n$ bis $VSt_1$-vertikalen Rohwasser-Vorwärmer VW vorgewärmt und anschließend mittels eines ebenfalls mit kondensierendem Dampf beheizten vielstufigen -Stufen $FSt_1$ bzw. $FSt_n$ - vertikalen Fallfilm-Verdampfers FV verdampft. Hierzu wird der ersten Stufe $FSt_1$, die die erste VTE-Prozeß-Stufe des Verfahrens bildet, über eine Leitung 11 Primärdampf zugeführt, der gleichzeitig auch der Beheizung der obersten Stufe $VSt_1$ des Vorwärmers dient. Das vorgewärmte Meerwasser gelangt über einen Überlauf 12 in die erste Stufe $FSt_1$ des Fallfilm-Verdampfers FV und von dort jeweils zu der benachbarten nächsten Stufe und so fort, bis alle Stufen $FSt_1$ bis $FSt_n$ durchlaufen sind. Der in der ersten Stufe gebildete Dampf sowie der Dampfanteil, der durch Entspannung des Kondensats aus der ersten Stufe bei 14 entsteht, dient der Beheizung der zweiten Stufe $FSt_2$ des Fallfilm-Verdampfers sowie der zugeordneten Stufe $VSt_1$ bis $VSt_n$ des Vorwärmers, wie dies durch die Verbindungen 15, 16 und 17 gezeigt ist. In gleicher Weise sind die folgenden jeweils einander zugehörigen Stufen des Fallfilm-Verdampfers und Rohwasser-Vorwärmers miteinander verbunden, so daß sich der Prozeß in jeder Stufe wiederholt. Der in der letzten Stufe $FSt_n$ verbleibende Dampf wird bei 21 kondensiert und gemeinsam mit dem Süßwasser-Destillat durch eine Pumpe 23 abgepumpt. Nach dem Durchlaufen aller Prozeß-Stufen kann also bei 23 das Reinwasser und bei 24 die unterhalb der letzten Stufe bei 25 aufgefangene sole abgezogen werden. Jeder Überlauf 12 oder 14 bilden jeweils eine MSF-Stufe.

Der Rohwasser-Vorwärmer VW als auch der die VTE-Prozeß-Stufen umfassende Fallfilm-Verdampfer FV sind aus geprägten Wärmetauscherplatten aufgebaut, die in Längs- und Querrichtung rasterförmig ausgerichtete und gleichmäßig angeordnete Sicken aufweisen. Diese Wärmetauscherplatten sind jeweils paarweise spiegelbildlich aufeinanderliegend derart zusammengefaßt, daß die in der einen Richtung orientierten Sicken eines Wärmetauscher-Plattenpaares rohrähnliche Kanäle bilden und die in der anderen Richtung orientierten Sicken mit der benachbarten Wärmetauscher-Platte des benachbarten Wärmetauscher-Plattenpaares spaltähnliche Kanäle begrenzen. Dabei ist vorgesehen, daß den den Rohwasser-vorwärmer bildenden Wärmetauscher-Platten rohrseitig Dampf und spaltseitig Wasser, den den Fallfilm-Verdampfer bildenden Wärmetauscher-Platten dagegen rohrseitig Wasser und spaltseitig Dampf zugeleitet wird. Die rohrähnlichen Kanäle des Fallfilm-Verdampfers sind vertikal ausgerichtet und bilden die Mantelflächen für die Filmverdampfung des zugeführten Rohwassers, während die für die Heizdampfführung vorgesehenen Kanäle horizontal ausgerichtet sind und in der geometrischen Mitte des Fallfilm-Verdampfers in eine sie miteinander verbindende prägefreie Zone 26 münden. Auf diese Art und Weise können die wärmetauschenden Medien im Kreuzstrom zueinander fließen. Die gestapelten Wärmetauscher-Plattenpaare werden in ihrer Lage mittels Seitenwänden gehalten.

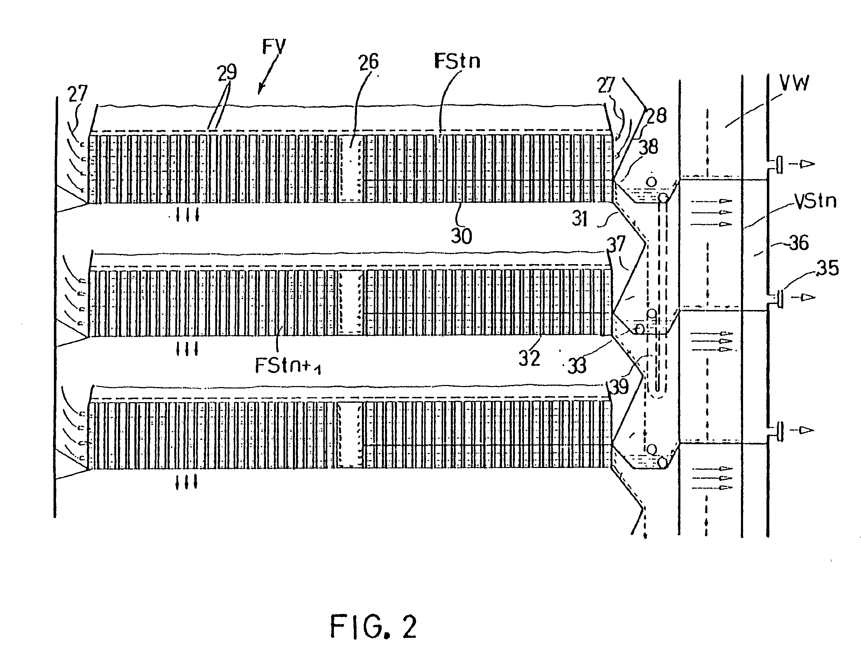

In der Fig. 2 sind drei Stufen FSt des erfindungsgemäßen Fallfilm-Verdampfers mit den zugeordneten Stufen VSt des Rohwasser-Vorwärmers in schematischer Weise dargestellt. Der Rohwasser-Vorwärmer VW erstreckt sich in vertikaler Richtung und schließt sich mit seinen Heizflächen direkt an die Dampfräume der VTE- und MSF-Stufen an.

Wie anhand der obersten Stufe $FSt_n$ zu erkennen ist, strömt der Dampf an beiden Stirnseiten des Plattenstapels entlang der Pfeile in die spaltähnlichen Kanäle ein. Während auf der in Bezug auf die Fig. 2 linken Seite der VTE-Stufe der vollständige Querschnitt des Plattenstapels zum Dampfeintritt verfügbar ist, ist auf der in Bezug auf die Fig. 2 rechten Seite der VTE-Stufe ein unterer Teil, bestehend aus drei übereinander angeordneten spaltähnlichen Kanalreihen, mittels eines Leitbleches 28 gegenüber dem Dampf 27 abgeschirmt. Der Dampf strömt in Pfeilrichtung bis zu der prägungsfreien Zone 26 in der geometrischen Mitte der VTE-Prozeß-Stufe, wobei das in den einzelnen spaltähnlichen Kanälen anfallende Süßwasserdestillat 29 in Dampfrichtung mitgeführt und in der prägungsfreien Zone 26 gesammelt wird. Von hier wird das Süßwasserdestillat zusammen mit dem Destillat- oder Produktdampf über die unteren spaltähnlichen Kanäle 30 sowie Leitbleche 31, die gleichzeitig als Zentrifugal-Tropfenabscheider dienen, in einen Destillatentspannungsraum 32 geleitet, welcher der entsprechenden Rohwasser-Vorwärmerstufe $VSt_n$ zugeordnet ist. Während das Süßwasser-Destillat sich in der Produkttasche 33 sammelt, gelangt der Restdampf in die Rohwasser-Vorwärmerstufe $VSt_n$ und wird dort auskondensiert, wobei das Kondensat über ein Leitblech der Produkttasche 33 zugeführt wird.

Die bei jeder Entspannung und Kondensation anfallenden Inertgase werden aus jeder Stufe lediglich am Vorwärmer durch den Stutzen 35 abgesaugt, der sich in einem Hohlraum 36 zwischen dem Vorwärmer VW und der Seitenwand am Endpunkt der Kondensation befindet. Die Inertgas-Saugleistung für die einzelnen Stufen wird durch Drosselventile in den Anschlußleitungen geregelt.

Der Destillat-Entspannungsraum 32 ist gegenüber der nachfolgenden Stufe $FSt_{n+1}$ durch das Leitblech 37 verschlossen und gegenüber derjenigen stufe, die der stufe $FSt_n$ vorangeschaltet ist, durch die Produkttasche 38. Die Produkttaschen 33 und 38 sind über eine Syphonleitung 39 miteinander verbunden.

Die vorbeschriebene Kombination von VTE- und MSF-Prozeß ergibt viele Vorteile, die alle gemeinsam zu der bisher nicht für möglich gehaltenen hohen Ausbeute von Destillat (Süßwasser) führen, wobei insbesondere die Benutzung der an sich bekannten Wärmetauscher in Plattenform beiträgt. Durch die gegenüber dem bekannten Fallfilm-Verdampfer veränderte Dampfzuführung und Dampfabführung aus der VTE-Prozeß-Stufe erfolgt die Ableitung des Süßwasser-Destillats und der Inertgase in der gleichen Strömungsrichtung wie der aus Destillat- bzw. Kondensat- und Primärdampf bestehende Restdampf. Dadurch wird zunächst die Ableitung des Süßwasser-Destillats aus den einzelnen spaltähnlichen Kanälen wesentlich verbessert. Für diese Ableitung ist es nicht mehr erforderlich, daß das Süßwasser-Destillat ein hohes Niveau erreicht, sondern es wird aufgrund des Druckgefälles und der Dampfströmung in Richtung zur entsprechenden Rohwasser-Vorwärmerstufe abgeführt. Hiermit ergibt sich gleichzeitig der Vorteil einer verbesserten Ausnutzung der zum Wärmetausch zur Verfügung stehenden Wärmetauscherflächen, die kaum noch durch Süßwasser-Destillat abgedeckt werden. Schließlich ist die Inertgasspülung im Bereich der prägefreien Zone 26 erheblich verbessert, da die Inertgas- und Restdampfführung durch in gleicher Richtung strömendes Süßwasser-Destillat begünstigt wird. Der gesamte Inertgasanteil und Restdampfanteil steht für die Rohwasservorwärmung in der entsprechenden Vorwärmerstufe zur Verfügung, so daß auch hier ein effektiverer Wärmetausch erzielt wird. Schließlich wird die Inertgasabführung dadurch vereinfacht, daß das Absaugen des Inertgases nur noch an einer Stelle am Endpunkt der Kondensation der Vorwärmerstufe erfolgt.

## Ansprüche

1. Verfahren zur Destillation von Süßwasser aus Meerwasser durch Filmverdampfung in einem mehrstufigen VTE-Prozeß, wobei das Meerwasser nach Durchlaufen der ersten VTE-Prozeß-Stufe jeweils vor Eintritt in die nächstfolgende VTE-Prozeß-Stufe über eine Staustelle geführt und dabei in mindestens je einer MSF-Prozeß-Stufe einer Entspannungsverdampfung unterworfen wird, wobei das jeweilig Süßwasser-Destillat und das jeweilige Sole-Kondensat alle nachfolgenden VTE-Prozeß- und MSF-Prozeß-Stufen gemeinsam durchlaufen, derart, daß der letzten VTE-Prozeß-Stufe das Sole-Kondensat und der letzten MSF-Prozeß-Stufe das Süßwasser-Destillat entnommen werden können, wobei der zur Aufheizung des Meerwassers dienende Dampf mit der ersten VTE-Prozeß-Stufe beginnend durch alle Verdampfungsstufen nacheinander geführt und dabei mit den Dampfanteilen zumindest aus den anfänglichen VTE-Prozeß-Stufen vermischt wird, und wobei die in jeder Prozeßstufe ($FSt_n$) anfallenden Inertgase in der entsprechenden Stufe ($VSt_n$) des Rohwasser-Vorwärmers (VM) abgesaugt werden dadurch **gekennzeichnet**, daß das Süßwasser-Destillat und die Inertgase in gleichgerichteter Strömungsrichtung mit dem aus Destillat- bzw. Kondensat- und Primärdampf bestehenden Restdampf aus den jeweiligen VTE-Prozeß-Stufen ($FSt_n$) abgeleitet werden.

2. Verfahren nach Anspruch 1, dadurch **gekennzeichnet**, daß das Süßwasser-Destillat und das Gemisch aus Inertgasen und Restdampf über eine Gefällestrecke zu einer entsprechenden Stufe ($VSt_n$) des Rohwasser-Vorwärmer (VW) abgeleitet werden, wobei durch das Gefälle eine Trennung von Destillat und dem Gemisch aus Restdampf und Inertgasen erfolgt.

3. Verfahren nach den Ansprüchen 1 und 2, dadurch **gekennzeichnet**, daß das Süßwasser-Destillat über die Gefällestrecke in einer Produkttasche (33) und das Gemisch aus Restdampf und Inertgasen in die entsprechende Stufe ($VSt_n$) des Rohwasser-Vorwärmers (VW) geleitet werden.

4. Verfahren nach einem der Ansprüche 1 bis 3, dadurch **gekennzeichnet**, daß sich der Restdampf und die Inertgase aus der VTE-Stufe vor ihrem Eintritt in die Rohwasser-Vorwärmer-Stufe in einem Destillatentspannungsraum (32) mit dem Destillatdampf der vorausgehenden Stufe vermischen.

5. Vorrichtung zur Durchführung des Verfahrens nach einem der Ansprüche 1 bis 4, wobei sowohl der Rohwasser-Vorwärmer (VW) als auch der die VTE-Prozeß-Stufen umfassende Fallfilm-Verdampfer (FV) aus geprägten Wärmetauscherplatten bestehen, die in Längs- und Querrichtung rasterförmig ausgerichtete und gleichmäßig angeordnete Sicken aufweisen und die jweils paarweise spiegelbildlich aufeinanderliegend derart zusammengefaßt sind, daß die in der einen Richtung orientierten Sicken eines Wärmetauscher-Plattenpaares rohrähnliche Kanäle bilden und die in der anderen Richtung orientierten Sicken mit der benachbarten Wärmetauscher-Platte des benachbarten Wärmetauscher-Plattenpaares spaltähnliche Kanäle begrenzen, wobei die rohrähnlichen Kanäle vertikal ausgerichtet liegen und die Mantelflächen für die Filmverdampfung des zugeführten Rohwassers bilden, während die für die Heizdampfführung vorgesehenen Kanäle horizontal ausgerichtet liegen und- in der geometrischen Mitte des Fallfilm-Verdampfers in eine sie miteinander verbindende prägungsfreie Zone münden, dadurch **gekennzeichnet**, daß auf der zum Rohwasser-Vorwärmer (VW) gelegenen Dampf-Eintrittsseite der jeweiligen VTE-Prozeß-Stufe wenigstens eine untere Spaltkanalreihe (30) gegenüber dem zugeführten Produktdampf (27) abgeschimt ist, so daß Süßwasser-Destillat (29) und das Gemisch aus Inertgasen und Restdampf in gleichgerichteter Strömungsrichtung aus der prägungsfreien Zone (26) über diese Spaltkanalreihe (30) ableitbar sind.

6. Vorrichtung nach Anspruch 5, dadurch **gekennzeichnet**, daß drei übereinander angeordnete dem Rohwasser-Vorwärmer (VW) zugewandte untere Spaltkanalreihen (30) gegenüber dem zugeführten Produktdampf (27) abgeschirmt sind.

7. Vorrichtung nach den Ansprüchen 5 oder 6 dadurch **gekennzeichnet**, daß sich an die unteren spaltähnlichen Kanäle (30) ein nach unten geneigtes Leitblech (31) anschließt, welches mit dem zur Abschirmung der unteren spaltähnlichen Kanäle der nächsten VTE-Prozeß-Stufe dienenden Leitblech (37) verbunden ist und gleichzeitig der Einleitung des Dampfes in die nachfolgende Stufe ($FSt_{n+1}$) dient.

8. Vorrichtung nach einem der Ansprüche 5 bis 7, dadurch **gekennzeichnet**, daß der zwischen den Leitblechen und der entsprechenden Rohwasser-Vorwärmer-Stufe gebildete Destillat-Entspannungsraum (32) nach oben und nach unten durch Produkttaschen (33, 38) zum Auffangen des Süßwasser-Destillats aus den VTE-Prozeß-Stufen verschlossen ist.

9. Vorrichtung nach Anspruch 8, dadurch **gekennzeichnet**, daß die Produkttaschen (33, 38) untereinander durch Siphonleitungen (39) miteinander verbunden sind.

**Revendications**

1. Procédé pour la production d'eau douce par distillation d'eau de mer par évaporation de film dans un procédé VTE à étages multiples, l'eau de mer, après avoir parcouru le premier étage du procédé VTE et chaque fois avant l'entrée dans l'étage suivant du procédé VTE, étant guidée via un point d'arrêt et étant soumise à une distillation éclair dans au moins un des étages du procédé MSF, le distillat d'eau douce respectif et le condensat de saumure respectif parcourant ensemble tous les étages des procédés VTE et MSF suivants, de façon que le condensat de saumure peut être pris de l'étage final du procédé VTE et le distillat d'eau douce de l'étage final du procédé MSF, la vapeur servant au chauffage de l'eau de mer étant successivement guidée à travers tous les étages d'évaporation, commençant au premier étage du procédé VTE, ladite vapeur étant mélangée avec les portions de vapeur provenant au moins des étages initials du procédé VTE, et les gaz inertes produits à chaque étage de procédé (FSt$_n$) étant aspirés à l'étage correspondant (VSt$_n$) du réchauffeur d'eau brute (VM), **caractérisé en ce que** le distillat d'eau douce et les gaz inertes sont évacués des étages du procédé VTE (FSt$_n$) correspondants dans le même sens d'écoulement et ensemble avec la vapeur résiduelle composée de vapeur de distillat et/ou de condensat et de vapeur primaire.

2. Procédé selon revendication 1, **caractérisé en ce que** le distillat d'eau douce et le mélange de gaz inertes et de vapeur résiduelle sont évacués via une partie inclinée vers un étage correspondant (VSt$_n$) du réchauffeur d'eau brute (VM), l'inclinaison effectuant une séparation,du distillat et du mélange composé de vapeur résiduelle et de gaz inertes.

3. Procédé selon les revendications 1 et 2, **caractérisé en ce que** le distillat d'eau douce est guidé à un récipient de produit (33) via la partie inclinée, et que le mélange de vapeur résiduelle et de gaz inertes est conduit à l'étage correspondant (VSt$_n$) du réchauffeur d'eau brute (VW).

4. Procédé selon l'une des revendications 1 à 3, **caractérisé en ce** qu'avant l'entrée à l'étage du réchauffeur d'eau brute la vapeur résiduelle et les gaz inertes de l'étage VTE se mélangent avec la vapeur de distillat de l'étage précédent dans une chambre de détente du distillat (32).

5. Dispositif pour la réalisation du procédé selon l'une des revendications 1 à 4, où aussi bien le réchauffeur d'eau brute (VW) que l'évaporateur du film tombant (FV) comportant les étages du procédé VTE sont constitués par des plaques d'échange thermique gaufrées ayant des moulures alignées de manière longitudinale et transversale en forme de grille et arrangées régulièrement, lesdites moulures étant réunies en paires superposées de manière inversée, de façon que les moulures d'une paire de plaques d'échange thermique orientées vers une direction forment des canaux ressemblant à des tubes et les moulures orientées vers l'autre direction délimitent ensemble avec la plaque d'échange thermique voisine de la paire voisine de plaques d'échange thermique des canaux ressemblant à des fentes, les canaux ressemblant, à des tubes étant alignés verticalement et formant les nappes pour l'évaporation de film de l'eau brute amenée, alors que les canaux prévus pour la conduite de la vapeur de chauffage sont alignés horizontalement et débouchent au centre géométrique de l'évaporateur du film tombant dans une région non-gaufrée reliant lesdits canaux, **caractérisé en ce** qu'au côté d'entrée de vapeur de l'étage correspondant du procédé VTE en face du réchauffeur d'eau brute (VW) au moins une rangée inférieure de canaux ressemblant à des fentes (30) est protégée contre la vapeur du produit amenée (27), de sorte que du distillat d'eau douce (29) et le mélange de gaz inertes et vapeur résiduelle peuvent être évacués de la région non-gaufrée (26) via ladite rangée de canaux ressemblant à des fentes (30) dans le même sens d'écoulement.

6. Dispositif selon revendication 5, **caractérisé en ce que** trois rangées inférieures de canaux ressemblant à des fentes (30) superposées et en face du réchauffeur d'eau brute (VW) sont protégées contre la vapeur du produit amenée (27).

7. Dispositif selon les revendications 5 ou 6, **caractérisé en ce** qu'un déflecteur (31) incliné vers le bas est adjacent aux canaux inférieurs ressemblant à des fentes (30), ledit déflecteur étant relié au déflecteur (37) prévu pour la protection des canaux inférieurs ressemblant à des fentes du prochain étage du procédé VTE, et servant en même temps à l'introduction de la vapeur dans l'étage suivant (FSt$_{n+1}$).

8. Dispositif selon l'une des revendications 5 à 7, **caractérisé en ce que** la chambre de détente du distillat (32) formée entre les déflecteurs et l'étage de réchauffeur d'eau brute correspondant est fermée vers le haut et vers le bas par des récipients du produit (33, 38) pour capter le distillat d'eau douce provenant des étages du procédé VTE.

9. Dispositif selon revendication 8, **caractérisé en ce que** les récipients du produit (33, 38) sont interconnectés par des conduites à siphon (39).

## Claims

1. Process for the distillation of fresh water from sea water by film evaporation within a multistage VTE-process, wherein the sea water after passing through the first VTE-process stage and prior to entering the following VTE-process stage is guided via a retaining point and subjected to a flash evaporation in at least each MSF-process stage, the respective fresh water distillate and the respective brine condensate passing together through all following VTE-process and MSF-process stages in such a way that the brine condensate can be removed from the final VTE-process stage and the fresh water distillate from the final MSF-process stage, the steam used for heating the sea water being successively passed through all evaporation stages starting with the first VTE-process stage and mixed with the steam portions from at least the initial VTE-process stages, and with the inert gases arising in each process stage (FSt$_n$) being removed by suction in the corresponding stage (VSt$_n$) of the untreated water preheater (VM), **characterized in that** the fresh water distillate and the inert gases are evacuated together with the residual steam consisting of distillate steam, condensate steam and primary steam respectively in the same direction of flow from the respective VTE-process stages ($FSt_n$).

2. Process according to claim 1, **characterized in that** the fresh water distillate and the mixture of inert gases and residual steam are evacuated via a fall section to a corresponding stage ($VSt_n$) of the untreated water preheater (VW), the fall effecting a separation of distillate and the mixture of residual steam and inert gases.

3. Process according to claims 1 and 2, **characterized in that** the fresh water distillate is guided to a product container (33) via the fall section and the mixture of residual steam and inert gases is guided to the corresponding stage ($VSt_n$) of the untreated water preheater (VW).

4. Process according to any of claims 1 to 3, **characterized in that** prior to their entering the untreated water preheater stage the residual steam and the inert gases from the VTE-stage intermix with the distillate steam of the preceding stage in a distillate flash chamber (32).

5. Apparatus for carrying out said process according to any of claims 1 to 4, wherein both the untreated water preheater (VW) and the falling film evaporator (FV) comprising the VTE-process stages consist of embossed heat exchanger plates having beads which are aligned longitudinally and transversely in grid-like manner and uniformly disposed, said beads being combined in pairs which are superposed in mirror image to each other in such a way that the beads of a pair of heat exchanger plates oriented to one direction form tube-like ducts, and the beads oriented to the other direction delimit slot-like ducts together with the adjacent heat exchanger plate of the adjacent pair of heat exchanger plates, the tube-like ducts extending vertically and forming the surface area for the film evaporation of the supplied untreated water, whereas the ducts provided for conducting the heating steam extend horizontally and lead into a non-embossed area interconnecting them which is located in the geometric center of the falling film evaporator, **characterized in that** on the steam inlet side facing the untreated water preheater (VW) of the respective VTE-process stage at least one lower range of slot-like ducts (30) is screened from the supplied product steam (27), so that fresh water distillate (29) and the mixture of inert gases and residual steam can be evacuated in the same direction of flow from the non-embossed area (26) via said range of slot-like ducts (30).

6. Apparatus according to claim 5, **characterized in that** three superposed lower ranges of slot-like ducts (30) facing the untreated water preheater (VW) are screened from the supplied product steam (27).

7. Apparatus according to claims 5 or 6, **characterized in that** a baffle plate (31) with a downward inclination is adjacent to the lower slot-like ducts (30), said baffle plate (31) being linked with the baffle plate (37) which serves to screen the lower slot-like ducts of the following VTE-process stage, and at the same time serving the purpose of introducing the steam into the following stage ($FSt_{n+1}$).

8. Apparatus according to any of claims 5 to 7, **characterized in that** the distillate flash chamber (32) formed between the baffle plates and the corresponding untreated water preheater stage is sealed to the top and to the bottom by product containers (33, 38) in order to collect the fresh water distillate from the VTE process stages.

9. Apparatus according to claim 8, **characterized in that** the product containers (33, 38) are interconnected by siphon pipes (39).

## FIG. 1

FIG. 2

EP 0 245 406 B1